# EUROPÄISCHE PATENTSCHRIFT

(11) **EP 1 186 468 B1**
(45) Veröffentlichungstag und Bekanntmachung des Hinweises auf die Patenterteilung: **05.01.2005**
(21) Anmeldenummer: 00119248.3
(22) Anmeldetag: 06.09.2000
(51) Int. Cl.: B60N 2/58

(54) **Polsterung für die Rückenlehne eines Kraftfahrzeugsitzes**
Upholstery for a motor-vehicle seat backrest
Rembourrage pour un dossier de sièges de véhicules automobiles

(43) Veröffentlichungstag der Anmeldung: 13.03.2002
(73) Patentinhaber: BENTELER AG, D-33104 Paderborn (DE)
(72) Erfinder: Perske, Joachim, 33154 Salzkotten (DE); Bendler, Jens, 33102 Paderborn (DE); Stosch, Andreas, 33154 Salzkotten (DE); Plass, Andreas, 33719 Bielefeld (DE); Stevens, Frans, 5074 Pt Biezenmortel (NL)
(74) Vertreter: Ksoll, Peter, Dr.-Ing.

(56) Entgegenhaltungen:
- EP-A- 0 231 692
- EP-A- 0 252 783
- DE-A- 3 037 834
- DE-A- 4 219 657
- DE-A- 19 734 408
- DE-C- 4 118 396
- DE-U- 29 822 649
- FR-A- 2 737 991
- FR-A- 2 747 545

## Beschreibung

Die Erfindung betrifft eine Rückenlehne als Bestandteil eines Kraftfahrzeuges gemäß den Merkmalen im Oberbegriff von Patentanspruch 1.

Bei Rückenlehnen von Kraftfahrzeugsitzen bekannter Bauart kommen durch einen Rohrrahmen verstärkte Blechschalen zum Einsatz mit Polsterungen aus einem aufgelegten Schaumstoff, in dem sogenannte Stofffangdrähte eingelegt sind. Im Polsterbezug sind Stofflaschen eingenäht, die in die Polsterdrähte eingefädelt werden, welche an ihren Enden Ösen aufweisen. Beim Aufpolstern werden diese Ösen in die im Schaumstoff vorhandenen Stofffangdrähte eingehängt. Damit entsteht eine Verbindung zwischen der Polsterung und dem Polsterbezug. Anschließend wird der Polsterbezug an seinen Außenkanten mittels Kedern mit der Blechschale verbunden. Im Sitzbereich gibt es somit keine Verbindung zwischen Polsterbezug und Blechschale.

Durch die gattungsbildende DE 41 18 396 C1 zählt eine Sitzbezugbefestigung für Kraftfahrzeuge zum Stand der Technik. An der dem Polsterkern zugewandten Unterseite des Sitzbezugs greifen Halteschlaufen an, in die jeweils ein Haltebügel eingreift. Auf der Unterseite des Polsterkerns ist eine Blechschale angeordnet. Dort sind die Haltebügel in Ausnehmungen festgelegt.

Hiervon ausgehend liegt der Erfindung die Aufgabe zugrunde, eine Rückenlehne zu schaffen, welche bei gleichem Bauraum eine straffere Polsterung ermöglicht und die zudem fertigungstechnisch vorteilhaft ist.

Die Lösung dieser Aufgabe besteht in einer Rückenlehne gemäß den Merkmalen von Patentanspruch 1.

Kern der Erfindung bildet die Maßnahme, die Polsterung durch Halteelemente auf der Blechschale zu arretieren, wobei jedes Halteelement mit einem Befestigungsfuß in einer Ausnehmung der Blechschale festgelegt ist sowie mit einem Hakenabschnitt in die Polsterung greift. Die Polsterung ist durch einen Verbinder mit dem Halteelement gekoppelt. Zur Herstellung der Kopplung zwischen Verbinder und Halteelement besitzt das Halteelement an seinem dem Befestigungsfuß gegenüberliegenden Ende eine Aufnahme, in welche der Verbinder mit einem Halteprofil eingreift.

Hierdurch wird eine direkte Anbindung des Polsterbezuges an die Blechschale geschaffen. Die Erfindung ermöglicht eine sehr viel schnellere Aufpolsterung der Rückenlehne und auch den Einsatz von dickeren Schaumstoffauflagen als Polsterung. Damit kann eine straffere Polsterung auf gleichem Bauraum ermöglicht werden.

In der Blechschale der Rückenlehne werden in definierten Positionen die notwendigen Ausnehmungen eingebracht. Dies kann im Zuge der Formgebung der Schale erfolgen oder auch in einem weiteren Fertigungsschritt. In diese vorzugsweise vierkantig gestalteten Ausnehmungen werden die Halteelemente eingesetzt. Die Halteelemente sind zweckmäßigerweise aus Kunststoff. Auf diese kann das Schnittschaumteil als Polsterung aufgesteckt werden. Die Polsterung ist dann transportsicher fixiert. Die Fixierung bzw. Lageorientierung wird durch den Hakenabschnitt gewährleistet. Logistisch ist dies vorteilhaft, weil das Zwischenbauteil in diesem Zustand zum Polsterer geliefert werden kann. Hier wird die Rückenlehne mit einem Polsterbezug bezogen, wobei eine Kopplung zwischen dem Polsterbezug und dem Halteelement durch einen Verbinder hergestellt wird.

Auf diese Weise ist eine direkte Anbindung zwischen Polsterbezug und Blechschale gewährleistet. Durch diese Maßnahme können dickere Polsterungen bzw. straffere Polsterungen erreicht werden, und zwar bei gleichem Bauraum. Auch qualitativ ebenso wie in der Lebenserwartung ist die Rückenlehne verbessert.

Vorteilhafte Ausgestaltungen des grundsätzlichen Erfindungsgedankens sind Gegenstand der abhängigen Ansprüche 2 bis 9.

Nach den Merkmalen von Patentanspruch 2 ist jede der für die Halteelemente vorgesehenen Ausnehmungen in einer in Richtung zur Polsterung hin eingezogenen Vertiefung der Blechschale angeordnet. Der Befestigungsfuß steht dann nicht über die Rückseite der Blechschale vor. Auch kann manuell in die Vertiefung mit den Fingern gegriffen werden, um den Befestigungsfuß zu lösen und ein Halteelement zu demontieren.

Der Befestigungsfuß weist gemäß Patentanspruch 3 zwei federelastische Spreizschenkel und ein den freien Enden der Spreizschenkel im Abstand der Dicke der Blechschale gegenüberliegendes Widerlager auf. Ein Halteelement kann dann mit dem clipartigen Befestigungsfuß in die Ausnehmung ohne großen Aufwand durch bloßes Hineinstecken einrasten und ist dann lagesicher fixiert. Die Spreizschenkel drücken gegen die Blechschale. Auf der innen liegenden Seite der Blechschale stützt sich das Halteelement mit dem Widerlager ab.

Vorteilhafterweise sind an den freien Enden der Spreizschenkel einander abgewandte Aussparungen vorgesehen, wie dies Patentanspruch 4 vorsieht. Mit diesen Aussparungen liegen die Spreizschenkel an der umgebenden Blechwand der Ausnehmung an.

Gemäß den Merkmalen von Patentanspruch 5 weist der Hakenabschnitt zumindest einen in Richtung auf die Blechschale angestellten Widerhaken auf. Der oder die Widerhaken können unterschiedlich gestaltet sein. Sie gewährleisten eine zuverlässige Halterung der Polsterung beim Transport. Desweiteren wird bei der fertigen Rückenlehne ein Rutschen der Polsterung auf der Blechschale unter dem Polsterbezug vermieden.

Auch wenn konstruktiv verschiedenartige Gestaltungen der Aufnahme denkbar sind, wird eine besonders vorteilhafte Ausbildung der Aufnahme in den Merkmalen von Patentanspruch 6 gesehen. Danach ist die Aufnahme taschenartig gestaltet und weist zwei Schnappschenkel mit endseitigen Haltekrallen auf. Jeder Schnappschenkel ist an seiner Außenseite mit einer quer zu seiner Längserstreckung verlaufenden Ausnehmung versehen, in der etwa im mittleren Bereich ein Steg angeordnet ist. Hierdurch werden die federelastischen Halteeigenschaften der Schnappschenkel positiv unterstützt (Patentanspruch 7).

Nach den Merkmalen des Patentanspruchs 8 besteht der Verbinder aus einem Vliesfaden mit einem angespritzten Halteprofil. Die bislang an den Polsterbezügen vorgesehenen Stoffschlaufen werden erfindungsgemäß durch den Verbinder aus Vlies mit angespritztem Halteprofil ersetzt. Mit dem Halteprofil wird der Verbinder in die Aufnahme des Halteelements eingedrückt. Hierbei greifen die Schnappschenkel mit ihren Haltekrallen das Halteprofil. Es ergibt sich eine direkte Anbindung des Polsterbezugs über den Verbinder und das Halteelement zur Blechschale.

Eine weitere vorteilhafte Ausbildung des grundsätzlichen Erfindungsgedankens charakterisiert Patentanspruch 9. Danach besitzt das Halteelement einen Mittelabschnitt mit einem kreuzförmigen Querschnitt. Der kreuzförmige Querschnitt trägt zu einer Stabilitätssteigerung und Erhöhung der Bruchfestigkeit des Halteelements bei.

Die Erfindung ist nachfolgend anhand eines in den Zeichnungen dargestellten Ausführungsbeispiels näher beschrieben. Es zeigen:
- Figur 1: einen Ausschnitt aus einer Rückenlehne eines Kraftfahrzeugs im Querschnitt und
- Figur 2: ein erfindungsgemäßes Halteelement in perspektivischer Darstellungsweise.

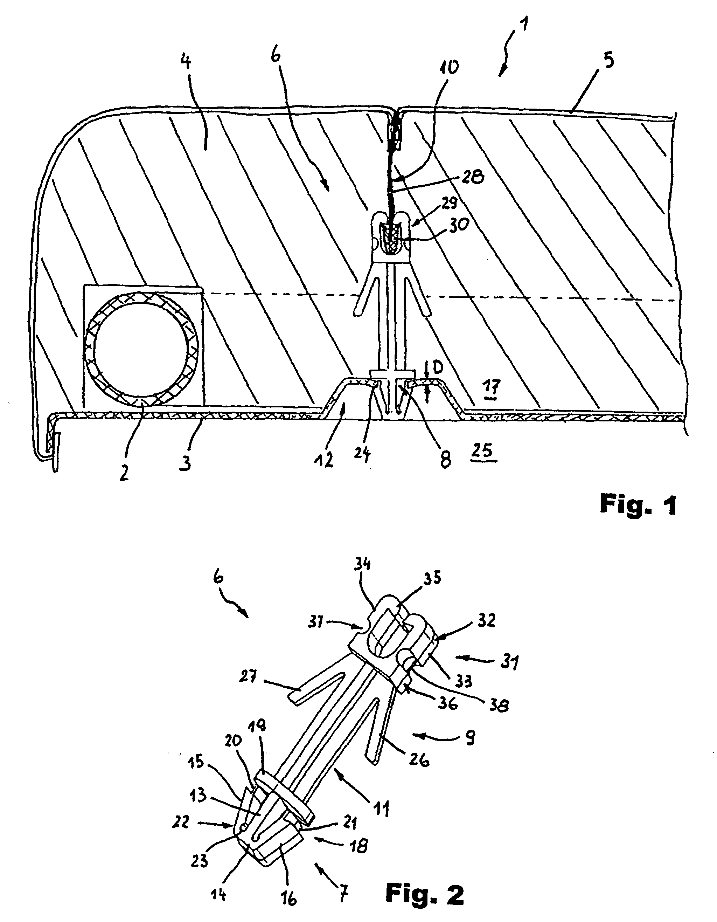

Figur 1 zeigt den Ausschnitt einer Rückenlehne 1 eines Kraftfahrzeugsitzes. Die Rückenlehne 1 weist eine auf einem Rohrrahmen 2 festgelegte Blechschale 3 auf mit einer hierauf befestigten Polsterung 4 aus Schnittschaum. Auf die Polsterung 4 ist ein Polsterbezug 5 gespannt.

Die Polsterung 4 ist durch mehrere auf der Blechschale 3 verteilt angeordnete Halteelemente 6 arretiert. Ein solches Halteelement zeigt Figur 2 im Detail.

Ein Halteelement 6 weist einen Befestigungsfuß 7 auf, über den es in einer Ausnehmung 8 der Blechschale 3 festgelegt werden kann. Mit einem Hakenabschnitt 9 greift das Halteelement 6 in die Polsterung 4. Der Polsterbezug 5 ist durch einen Verbinder 10 mit dem Halteelement 6 gekoppelt. In seinem Mittelabschnitt 11 besitzt das Halteelement 6 einen kreuzförmigen Querschnitt.

Die Ausnehmung 8 ist als Vierkantloch ausgeführt, welche in einer in Richtung zur Polsterung 4 hin eingezogenen Vertiefung 12 angeordnet ist. In das Vierkantloch wird der Befestigungsfuß 7 gesteckt. Der Befestigungsfuß 7 weist einen Mittelsteg 13 mit einem T-förmig verbreiterten Fußende 14 auf, an das sich zu beiden Seiten zwei federelastische Spreizschenkel 15, 16 angliedern. Auf der Innenseite 17 der Blechschale 3, den freien Enden 18 der Spreizschenkel 15, 16 im Abstand der Dicke D der Blechschale 3 gegenüber liegend, besitzt der Befestigungsfuß 7 ein Widerlager 19 in Form einer Platte, an die sich der Mittelabschnitt 11 anschließt. An den freien Enden 18 der Spreizschenkel 15, 16 sind quer einander abgewandte Aussparungen 20, 21 vorgesehen.

Der Befestigungsfuß 7 kann clipartig in der Ausnehmung 8 festgelegt werden. Hierbei wird der Befestigungsfuß 7 von der Innenseite 17 der Blechschale 3 her durch die Ausnehmung 8 geführt. Die Spreizschenkel 15, 16 werden dabei zusammengedrückt. Man erkennt, dass am fußseitigen Ende 22 der Spreizschenkel 15, 16 am Übergang zum Mittelsteg 13 etwa kreisförmige Auskehlungen 23 vorgesehen sind, welche sich über die Breite des Mittelstegs 13 bzw. deren Spreizschenkel 15, 16 erstrecken. Hierdurch können Materialverquetschungen beim Zusammendrücken der Spreizschenkel 15, 16 vermieden werden. Sobald die Spreizschenkel 15, 16 die Ausnehmung 8 passiert haben, spreizen sie sich infolge ihrer Federkraft auf. Sie stützen sich dann mit den Aussparungen 20 bzw. 21 an den benachbarten Wandungen 24 der Ausnehmung 8 ab.

Im Zusammenwirken mit dem Widerlager 19 ist eine stabile Festlegung des Halteelements 6 gewährleistet. Eine eventuell notwendige Demontage eines Halteelements 6 erfolgt durch Zusammendrücken der Spreizschenkel 15, 16 von der Rückseite 25 der Blechschale 3 her. Hierbei kann seitlich der Spreizschenkel 15, 16 in die Vertiefung 12 gegriffen werden. Durch Zusammendrücken der Spreizschenkel 15, 16 kann das Haltelement 6 dann aus der Ausnehmung 8 geschoben werden.

Auf die an der Blechschale 3 festgelegten Halteelemente 6 wird dann die als Polsterung 4 zum Einsatz gelangende Schaumstoffauflage aufgesteckt. Mit seinen beiden Widerhaken 26, 27 fixiert der Hakenabschnitt 9 die Schaumstoffauflage transportsicher. Die Blechschale 3 kann mit der Polsterung 4 zum nachgeschalteten Beziehvorgang transportiert und mit dem Polsterbezug 5 bespannt werden.

Am Polsterbezug 5 sind an auf die Halteelemente 6 abgestimmte Positionen die Verbinder 10 angenäht. Ein solcher Verbinder 10 besteht aus einem Vliesstreifen bzw. einem Vliesfaden 28, der an seinem freien Ende 29 ein Halteprofil 30 aus angespritztem Kunststoff aufweist. Dieses Halteprofil 30 des Verbinders 10 wird in eine am oberen Ende 31 des Halteelements 6 vorgesehene Aufnahme 32 eingedrückt. Die Aufnahme 32 wird von zwei Schnappschenkeln 33, 34 mit endseitigen Haltekrallen 35 gebildet. Die Schnappschenkel 33, 34 umgreifen das Halteprofil 30 und halten dieses fest. So ist eine direkte Anbindung zwischen Polsterbezug 5 und Blechschale 3 gewährleistet.

Man erkennt ferner insbesondere in der Figur 2, dass jeder Schnappschenkel 33, 34 an seiner Außenseite 36 eine quer zu seiner Längserstreckung verlaufende Ausnehmung 37 mit einem etwa im mittleren Bereich angeordneten Steg 38 aufweist.

### Bezugszeichenaufstellung:

- 1 -: Rückenlehne
- 2 -: Rohrrahmen
- 3 -: Blechschale
- 4 -: Polsterung
- 5 -: Polsterbezug
- 6 -: Halteelement
- 7 -: Befestigungsfuß
- 8 -: Ausnehmung
- 9 -: Hakenabschnitt
- 10 -: Verbinder
- 11 -: Mittelabschnitt
- 12 -: Vertiefung
- 13 -: Mittelsteg
- 14 -: Fußende von 13
- 15 -: Spreizschenkel
- 16 -: Spreizschenkel
- 17 -: Innenseite v. 3
- 18 -: freies Ende von 15, 16
- 19 -: Widerlager
- 20 -: Aussparung
- 21 -: Aussparung
- 22 -: Ende von 15, 16
- 23 -: Auskehlung
- 24 -: Wandung von 8
- 25 -: Rückseite von 3
- 26 -: Widerhaken
- 27 -: Widerhaken
- 28 -: Vliesfaden
- 29 -: freies Ende von 28
- 30 -: Halteprofil
- 31 -: oberes Ende von 6
- 32 -: Aufnahme
- 33 -: Schnappschenkel
- 34 -: Schnappschenkel
- 35 -: Haltekrallen
- 36 -: Außenseite
- 37 -: Ausnehmung
- 38 -: Steg

- D -: Blechdicke

## Patentansprüche

1. Rückenlehne als Bestandteil eines Kraftfahrzeugsitzes, welche eine Blechschale (3) und eine hierauf angeordnete Polsterung (4) mit einem Polsterbezug (5) aufweist und die Polsterung (4) durch Halteelemente (6) auf der Blechschale (3) arretiert ist, wobei jedes Halteelement (6) mit einem Befestigungsfuß (7) in einer Ausnehmung (8) der Blechschale (3) festgelegt ist sowie mit einem Hakenabschnitt (9) in die Polsterung (4) greift und der Polsterbezug (5) durch einen Verbinder (10) mit dem Halteelement (6) gekoppelt ist, **dadurch gekennzeichnet, dass** das Halteelement (6) am dem Befestigungsfuß (7) gegenüberliegenden Ende (31) eine Aufnahme (32) besitzt, in welche der Verbinder (10) mit einem Halteprofil (30) eingreift.

2. Rückenlehne nach Patentanspruch 1, **dadurch gekennzeichnet, dass** die Ausnehmung (8) in einer in Richtung zur Polsterung (4) hin eingezogenen Vertiefung (12) der Blechschale (3) angeordnet ist.

3. Rückenlehne nach Patentanspruch 1 oder 2, **dadurch gekennzeichnet, dass** der Befestigungsfuß (7) zwei federelastische Spreizschenkel (15, 16) und ein den freien Enden (17) der Spreizschenkel (15, 16) im Abstand der Dicke der Blechschale (3) gegenüberliegendes Widerlager (19) aufweist.

4. Rückenlehne nach Patentanspruch 3, **dadurch gekennzeichnet, dass** die freien Enden (18) der Spreizschenkel (15, 16) einander abgewandte Aussparungen (20, 21) aufweisen.

5. Rückenlehne nach einem der Patentansprüche 1 bis 4, **dadurch gekennzeichnet, dass** der Hakenabschnitt (9) zumindest einen in Richtung auf die Blechschale (3) angestellten Widerhaken (26, 27) aufweist.

6. Rückenlehne nach einem der Ansprüche 1 bis 5, **dadurch gekennzeichnet, dass** die Aufnahme (32) zwei Schnappschenkel (33, 34) mit endseitigen Haltekrallen (35) aufweist.

7. Rückenlehne nach Patentanspruch 6, **dadurch gekennzeichnet, dass** jeder Schnappschenkel (33, 34) an seiner Außenseite (36) eine quer zu seiner Längserstreckung verlaufende Ausnehmung (37) mit einem etwa im mittleren Bereich angeordneten Steg (38) aufweist.

8. Rückenlehne nach einem der Patentansprüche 1 bis 7, **dadurch gekennzeichnet, dass** der Verbinder (10) aus einem Vliesfaden (28) mit einem angespritzten Halteprofil (30) aus Kunststoff besteht.

9. Rückenlehne nach einem der Ansprüche 1 bis 8, **dadurch gekennzeichnet, dass** das Halteelement (6) einen Mittelabschnitt (11) mit einem kreuzförmigen Querschnitt besitzt.

## Claims

1. A brackrest as part of a motor vehicle seat, comprising a sheet-metal shell (3) and an upholstering (4) disposed thereon with an upholstery cover (5), and the upholstering (4) is retained on the sheet-metal shell (3) by retaining elements (6), each retaining element (6) being fixed by a foot (7) in a recess (8) of the sheet-metal shell (3) and engaging in the upholstering (4) by a hook portion (9) and the upholstery covering (5) is coupled by a connector (10) to the retaining element (6), **characterised in that** the retaining element (6) has, at the end (31) remote from the fixing foot (7), a recess (32) in which the connector (10) engages by a retaining profile (30).

2. A backrest according to claim 1, **characterised in that** the recess (8) is disposed in a depression (12) in the sheet-metal shell (3), said depression (12) extending in the direction of the upholstering (4).

3. A backrest according to claim 1 or 2, **characterised in that** the fixing foot (7) comprises two spring-elastic spreadable limbs (15,16) and an abutment (19) situated opposite the free ends (17) of the limbs (15,16) by a distance equivalent to the thickness of the sheet-metal shell (3).

4. A backrest according to claim 3, **characterised in that** the free ends (18) of the expandable limbs (15,16) have recesses (20,21) extending away from one another.

5. A backrest according to any one of claims 1 to 4, **characterised in that** the hook portion (9) comprises at least one barb (26,27) set in the direction of the sheet-metal shell (3).

6. A backrest according to any one of claims 1 to 5, **characterised in that** the holder (32) comprises two snap limbs (33,34) with end retaining claws (35).

7. A backrest according to claim 6, **characterised in that** each snap limb (33,34) comprises, on its outside (36), a recess (37) extending transversally of its length and having a web (38) disposed substantially in the middle zone.

8. A backrest according to any one of claims 1 to 7, **characterised in that** the connector (10) consists of a nonwoven filament (28) with a plastic retaining profile (30) moulded thereon.

9. A backrest according to any one of claims 1 to 8, **characterised in that** the retaining element (6) has a middle portion (11) of cruciform cross-section.

## Revendications

1. Dossier en tant que partie intégrante d'un siège de véhicule automobile, qui comprend une coque en tôle (3) et un rembourrage (4) agencé sur celle-ci avec un recouvrement (5), le rembourrage (4) étant maintenu sur la coque en tôle (3) au moyen d'éléments de retenue (6), où chaque élément de retenue (6) est fixé dans un évidement (8) de la coque en tôle (3) par une bride de fixation (7) et s'engage dans le rembourrage (4) par une section de crochet (9) et le recouvrement (5) est couplé à l'élément de retenue (6) par un raccord (10), **caractérisé en ce que** l'élément de retenue (6) possède sur l'extrémité (31) située en opposition à la bride de fixation (7) un logement (32) dans lequel le raccord (10) s'engage avec un profilé de retenue (30).

2. Dossier selon la revendication 1, **caractérisé en ce que** l'évidement (8) est agencé dans un enfoncement (12) de la coque en tôle (3) pratiqué dans la direction du rembourrage (4).

3. Dossier selon l'une quelconque des revendications 1 ou 2, **caractérisé en ce que** la bride de fixation (7) présente deux montants d'écartement (15, 16) élastiquement déformables et un contrefort (19) situé en opposition aux extrémités libres (17) des montants d'écartement (15, 16) à distance de l'épaisseur de la coque en tôle (3).

4. Dossier selon la revendication 3, **caractérisé en ce que** les extrémités libres (18) des montants d'écartement (15, 16) présentent des évidements (20, 21) orientés à l'opposé l'un de l'autre.

5. Dossier selon l'une quelconque des revendications 1 à 4, **caractérisé en ce que** la section de crochet (9) présente au moins une barbe (26, 27) disposée dans la direction de la coque en tôle (3).

6. Dossier selon l'une quelconque des revendications 1 à 5, **caractérisé en ce que** le logement (32) présente deux montants à enclenchement (33, 34) avec des crampons de retenue (35) du côté de l'extrémité.

7. Dossier selon la revendication 6, **caractérisé en ce que** chaque montant à enclenchement (33, 34) présente sur son côté extérieur (36) un évidement (37) s'étendant transversalement à sa dimension longitudinale avec une nervure (38) agencée approximativement dans une zone centrale.

8. Dossier selon l'une quelconque des revendications 1 à 7, **caractérisé en ce que** le raccord (10) est constitué d'un fil de carde (28) avec un profilé de retenue (30) coulé par injection en matière plastique.

9. Dossier selon l'une quelconque des revendications 1 à 8, **caractérisé en ce que** l'élément de retenue (6) possède une partie centrale (11) avec une section cruciforme.
